# EUROPEAN PATENT APPLICATION

(11) **EP 1 998 335 A2**
(43) Date of publication of application: **03.12.2008**
(21) Application number: 08251897.8
(22) Date of filing: 30.05.2008
(51) Int. Cl.: G11B 27/034

(54) **Imaging apparatus and method, and computer program product**

(30) Priority: 30.05.2007 JP 2007142905
(71) Applicant: FUJIFILM Corporation, Minato-ku Tokyo (JP)
(72) Inventor: Misawa, Atsushi, Taiwa-cho, Kurokawa-gun, Miyagi (JP)
(74) Representative: Stevens, Jason Paul

(57) **Abstract**

Problems when transferring a moving picture file recorded in a built-in memory to an external memory are solved by: receiving a setting of a continuous imaging time during which one image file is generated when imaging a moving picture; receiving an instruction to start imaging of the moving picture and initiating the imaging and generation of the image file; terminating the imaging to terminate the generation of the image file when the imaging time reaches the end of the continuous imaging time; then restarting the imaging of the moving picture to start generation of a new image file; repeating the generation of a new image file until an instruction to terminate the imaging is received; and when a plurality of image files is generated during a period from the time when the instruction to start imaging is received to the time when the instruction to terminate the imaging is received, attaching division information indicating that each image file is one of a plurality of dividedly generated image files to each image file by an information attaching section (39).

## Description

### BACKGROUND OF THE INVENTION

### Field of the Invention

The present invention relates to an imaging apparatus having a built-in memory for recording an image file of a moving picture obtained through imaging and an imaging method for use with the apparatus. The invention also relates to a computer program product for causing a computer to perform the imaging method.

### Description of the Related Art

Among imaging devices, such as digital cameras, digital video cameras and the like that obtain still pictures and moving pictures, one having a built-in memory fixedly provided inside of the device to record image files of obtained still pictures and moving pictures is proposed as described, for example, in Japanese Unexamined Patent Publication Nos. 8 (1996)-116481 and 10 (1998)-065947. In such imaging device, the image files obtained through imaging are stored only in the built-in memory, and the image files stored in the built-in memory is transferred to an external memory by connecting the external memory to the imaging device, thereby the images are reproduced on personal computers and the like.

In addition, an imaging device in which, when recording still pictures to an external memory as a moving picture by combining them, if the size of the image file of the combined moving picture exceeds the capacity of the external memory, the image file is tentatively recorded to the built-in memory and transferred to a new external memory after it is connected is also proposed as described, for example, in Japanese Unexamined Patent Publication No. 9(1997)-214880.

In the imaging devices disclosed in the patent publications described above, however, if the size of the image file of a moving picture grows and exceeds a free capacity of an external memory, the image file can not be transferred to the external memory. In an imaging device having the built-in memory described above, if the image file recorded in the built-in memory can not be transferred to an external memory, the imaging may be wasted since the image file can not be stored in another recording medium and reproduction or processing of the moving picture on a personal computer or the like is not allowed. Further, when a prolonged imaging is performed, in particular, it is convenient to handle the moving picture by dividing it into a plurality of files rather than handling it as a single file. In this case, it may be conceivable that the image file may be divided by manual operation, but that is very troublesome.

The present invention has been developed in view of the circumstances described above, and it is an object of the present invention to solve, in particular, the problems that occur when transferring the image file of a moving picture recorded in a built-in memory.

### SUMMARY OF THE INVENTION

A first imaging apparatus of the present invention is an apparatus including:
an imaging means for imaging a moving picture and generating an image file of the moving picture;
a built-in memory for recording the image file;
an image recording means for recording the image file to the built-in memory and reading out the image file therefrom;
a connection means for connecting an external memory;
a transfer means for transferring the image file recorded in the built-in memory to the external memory connected to the connection means;
an imaging time setting means for receiving a setting of a continuous imaging time during which one image file is generated when imaging the moving picture;
an imaging control means for controlling the imaging means and the image recording means such that the following are performed:
   receiving an instruction to start imaging of the moving picture and initiating the imaging and generation of the image file; terminating the imaging of the moving picture to terminate the generation of the image file when the imaging time of the moving picture reaches the end of the continuous imaging time; then restarting the imaging of the moving picture to start generation of a new image file; and repeating the generation of a new image file until an instruction to terminate the imaging of the moving picture is received; and
   an information attaching means for attaching, when a plurality of image files is generated during a period from the time when the instruction to start imaging is received to the time when the instruction to terminate the imaging is received, division information indicating that each of the image files is one of a plurality of dividedly generated image files to each of the image files.

A second imaging apparatus of the present invention is an apparatus including:
an imaging means for imaging a moving picture and generating an image file of the moving picture;
a built-in memory for recording the image file;
an image recording means for recording the image file to the built-in memory and reading out the image file therefrom;
a connection means for connecting an external memory;
a transfer means for transferring the image file recorded in the built-in memory to the external memory connected to the connection means;
a capacity information obtaining means for obtaining information of a capacity of the external memory;
an imaging time setting means for setting a continuous imaging time during which one image file is generated when imaging the moving picture based on the capacity of the external memory;
an imaging control means for controlling the imaging means and the image recording means such that the following are performed:
   receiving an instruction to start imaging of the moving picture and initiating the imaging and generation of the image file; terminating the imaging of the moving picture to terminate the generation of the image file when the imaging time of the moving picture reaches the end of the continuous imaging time; then restarting the imaging of the moving picture to start generation of a new image file; and repeating the generation of a new image file until an instruction to terminate the imaging of the moving picture is received; and
   an information attaching means for attaching, when a plurality of image files is generated during a period from the time when the instruction to start imaging is received to the time when the instruction to terminate the imaging is received, division information indicating that each of the image files is one of a plurality of dividedly generated image files to each of the image files.

The capacity information of the external memory may be obtained by having a user of the imaging apparatus input the information or by learning a capacity of an external memory frequently used by the user and reading out the learned capacity.

The imaging means may be a means for generating a still picture file, as well as a moving picture file.

In the first and second imaging apparatuses of the present invention, an image file of a moving picture obtained by imaging is not recorded directly to an external memory, but recorded only to the built-in memory by the image recording means. When an external memory is connected, the image file recorded in the built-in memory is transferred to the external memory by the transfer means.

The first and second imaging apparatuses of the present invention may further include a file conversion means for generating a combined moving picture file by combining image files recorded in the built-in memory and having corresponding division information attached thereto according to a free capacity of the external memory, when the external memory is connected to the connection means.

Further, the first and second imaging apparatuses of the present invention may further include a file list generation means for generating a file list of image files recorded in the built-in memory including the division information attached to the image files.

A first imaging method of the present invention is a method for use with an imaging apparatus having: an imaging means for imaging a moving picture and generating an image file of the moving picture; a built-in memory for recording the image file; an image recording means for recording the image file to the built-in memory and reading out the image file therefrom; a connection means for connecting an external memory; and a transfer means for transferring the image file recorded in the built-in memory to the external memory connected to the connection means, the method including the steps of:
receiving a setting of a continuous imaging time during which one image file is generated when imaging the moving picture;
receiving an instruction to start imaging of the moving picture and initiating the imaging and generation of the image file;
terminating the imaging of the moving picture to terminate the generation of the image file when the imaging time of the moving picture reaches the end of the continuous imaging time;
then restarting the imaging of the moving picture to start generation of a new image file;
repeating the generation of a new image file until an instruction to terminate the imaging of the moving picture is received; and
when a plurality of image files is generated during a period from the time when the instruction to start imaging is received to the time when the instruction to terminate the imaging is received, attaching division information indicating that each of the image files is one of a plurality of dividedly generated image files to each of the image files.

A second imaging method of the present invention is a method for use with an imaging apparatus having: an imaging means for imaging a moving picture and generating an image file of the moving picture; a built-in memory for recording the image file; an image recording means for recording the image file to the built-in memory and reading out the image file therefrom; a connection means for connecting an external memory; and a transfer means for transferring the image file recorded in the built-in memory to the external memory connected to the connection means, the method including the steps of:
obtaining information of a capacity of the external memory;
setting a continuous imaging time during which one image file is generated when imaging the moving picture based on the capacity of the external memory;
receiving an instruction to start imaging of the moving picture and initiating the imaging and generation of the image file;
terminating the imaging of the moving picture to terminate the generation of the image file when the imaging time of the moving picture reaches the end of the continuous imaging time;
then restarting the imaging of the moving picture to start generation of a new image file;
repeating the generation of a new image file until an instruction to terminate the imaging of the moving picture is received; and
when a plurality of image files is generated during a period from the time when the instruction to start imaging is received to the time when the instruction to terminate the imaging is received, attaching division information indicating that each of the image files is one of a plurality of dividedly generated image files to each of the image files.

The first and second imaging methods may further include the step of generating a combined moving picture file by combining image files recorded in the built-in memory and having corresponding division information attached thereto according to a free capacity of the external memory, when the external memory is connected to the connection means.

The first and second imaging methods of the present invention may be provided as a computer program product for causing a computer to perform the methods.

According to the first imaging apparatus and method of the present invention, a setting of a continuous imaging time during which one image file is generated when imaging a moving picture is received, and an instruction to start imaging of the moving picture is received and the imaging and generation of the image file are initiated. Further, the imaging of the moving picture is terminated to terminate the generation of the image file when the imaging time of the moving picture reaches the end of the continuous imaging time. Then, the imaging of the moving picture is restarted to start generation of a new image file, and the generation of a new image file is repeated until an instruction to terminate the imaging of the moving picture is received. When a plurality of image files is generated during a period from the time when the instruction to start imaging is received to the time when the instruction to terminate the imaging is received, division information indicating that each of the image files is one of a plurality of dividedly generated image files is attached to each of the image files.

Consequently, even when the period from the time when the instruction to start imaging is received to the time when the instruction to terminate the imaging is received, that is, the imaging time of a single imaging operation is long, the size of each image file recorded to the built-in memory is made substantially the same. As a result, when transferring an image file to an external memory, it is not necessary to divide the image file. Further, a moving picture is divided with respect to time, so that it is easy to know the timing when the moving picture will be chopped at the time of imaging. Still further, it becomes easy to find a plurality of image files generated through a single imaging operation by a user by referring to the division information, which allows the user to classify or combine the image files easily.

According to the second imaging apparatus and method of the present invention, information of a capacity of the external memory is obtained, and a continuous imaging time during which one image file is generated when imaging a moving picture is set based on the capacity of the external memory. Then, an instruction to start imaging of the moving picture is received and the imaging and generation of the image file are initiated. The imaging of the moving picture is terminated to terminate the generation of the image file when the imaging time of the moving picture reaches the end of the continuous imaging time. Then, the imaging of the moving picture is restarted to start generation of a new image file, and the generation of a new image file is repeated until an instruction to terminate the imaging of the moving picture is received. When a plurality of image files is generated during a period from the time when the instruction to start imaging is received to the time when the instruction to terminate the imaging is received, division information indicating that each of the image files is one of a plurality of dividedly generated image files is attached to each of the image files.

Consequently, even when the imaging time of a single imaging operation is long, the size of each image file recorded to the built-in memory is limited to a size transferable to the external memory. As a result, when transferring an image file to an external memory, it is not necessary to divide the image file. Further, it is easy to find a plurality of image files generated through a single imaging operation by a user by referring to the division information, which allows the user to classify or combine the image files easily.

Further, when generating a combined moving picture file by combining image files having corresponding division information, the file is generated according to a free capacity of an external memory. Thus, a combined image file of a moving picture having a size which can be accommodated in the external memory may be obtained. Consequently, it is not necessary for the user to edit or combine image files by taking into account the free capacity of the external memory.

### BRIEF DESCRIPTION OF THE DRAWINGS

Figure 1 is an external view of a digital camera in an embodiment of the present invention (part 1).

Figure 2 is an external view of a digital camera in an embodiment of the present invention (part 2).

Figure 3 is an external view of a digital camera in an embodiment of the present invention (part 3).

Figure 4 is a schematic block diagram of a digital camera to which an imaging apparatus according to a first embodiment of the present invention is applied, illustrating the internal configuration thereof.

Figures 5A and 5B illustrate setting screens displayed on a monitor in the first embodiment.

Figure 6 is a flowchart illustrating processing performed when a moving picture is imaged in the first embodiment.

Figure 7 is a flowchart illustrating a record list generation processing.

Figure 8 illustrates a record list displayed on the monitor.

Figure 9 is a schematic block diagram of a digital camera to which an imaging apparatus according to a second embodiment of the present invention is applied, illustrating the internal configuration thereof.

Figures 10A and 10B illustrate setting screens displayed on a monitor in the second embodiment.

Figure 11 is a flowchart illustrating processing performed when a moving picture is imaged in the second embodiment.

Figure 12 illustrates a table for limiting recording time of a moving picture in increments of 15 minutes.

Figure 13 is a flowchart illustrating image file transfer processing (part 1).

Figure 14 is a flowchart illustrating image file transfer processing (part 2).

Figure 15 is a flowchart illustrating image file transfer processing (part 3).

Figure 16 is a flowchart illustrating image file transfer processing (part 4).

Figure 17 is a flowchart illustrating external memory replacement processing.

### DESCRIPTION OF THE PREFERRED EMBODIMENTS

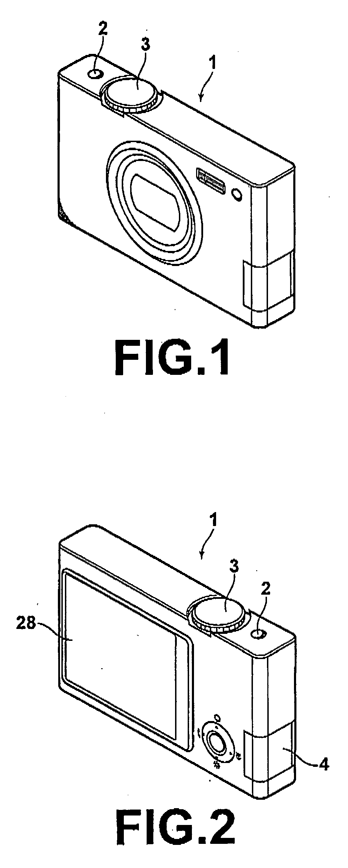

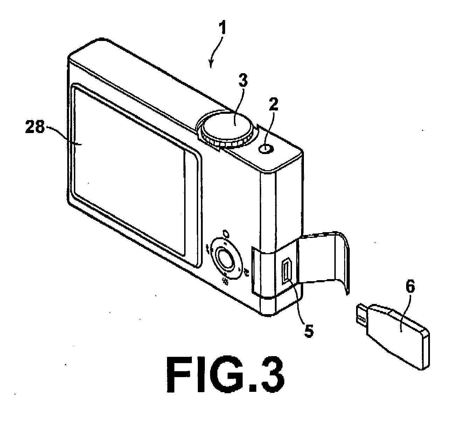

Hereinafter, exemplary embodiments of the present invention will be described with reference to the accompanying drawings. Figures 1 to 3 illustrate external views of a digital camera 1 in an embodiment of the present invention. As illustrated in Figures 1 to 3, the digital camera 1 has a release button 2 and a mode dial 3 used for setting an imaging mode on the top. In addition, the digital camera 1 has a monitor 28 of a liquid crystal or the like on the rear side. Further, a cover 4 is openably/closably provided on a side surface, and as illustrated in Figure 3, a connector 5 for connecting an external memory 6, such as a USB memory or the like is exposed by opening the cover 4, thereby the external memory 6 may be connected to the connector 5.

The external memory 6 is connected to the digital camera 1 by the connector 5 so as to be protruding from the digital camera 1, and the appearance of the digital camera 1 is not affected by the external memory 6 when not connected. In addition, the external memory 6 is not required to be accommodated inside the digital camera 1, so that it needs not be miniaturized. Further, where the shape of the connector 5 is standardized, commercially available memory modules having various different shapes may be used as the external memory 6.

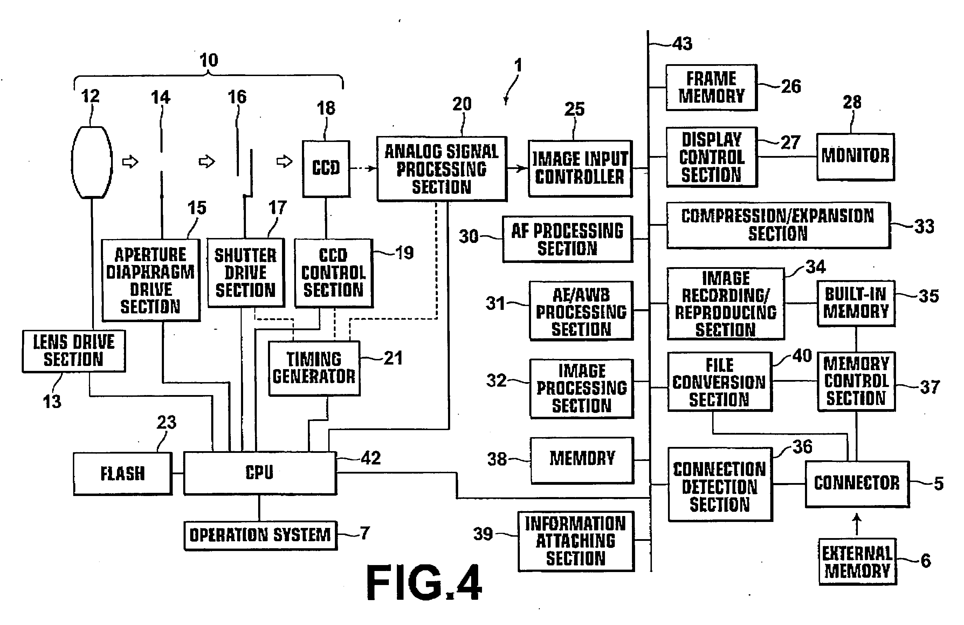

Figure 4 is a schematic block diagram of a digital camera to which an imaging apparatus according to a first embodiment of the present invention is applied, illustrating the internal configuration thereof. As illustrated in Figure 4, the digital camera 1 according to the first embodiment includes an operation system 7 having the release button 2, the mode dial 3 and the like.

An imaging system 10 has a taking lens 12 which includes a focus lens and a zoom lens. The focus lens and the zoom lens constituting the taking lens 12 are movable in the optical axis directions by a lens drive section 13.

An aperture diaphragm 14 is driven by an aperture diaphragm drive section 15. The aperture diaphragm drive section 15 controls the diameter of the aperture diaphragm based on aperture value data outputted from an AE /AWB control section 31.

A shutter 16 is a mechanical shutter and is driven by a shutter drive section 17. The shutter drive section 17 performs open/close control of the shutter 16 according to a signal generated when the release button is depressed and shutter speed data outputted from the AE/AWB control section 31.

A CCD 18, which is an image sensor, is provided on the rear side of the shutter 16. The CCD 18 has a photoelectric surface that includes multitudes of light receiving elements disposed two-dimensionally, and the light representing a subject image transmitted through an optical system including the taking lens 12 is focused on the photoelectric surface and subjected to a photoelectric conversion. In front of the photoelectric surface, a micro-lens array for focusing light on each pixel and a color filter array in which R, G, and B color filters are arranged regularly are disposed. The CCD 18 outputs charges stored in the respective pixels line by line as serial analog image signals in synchronization with a vertical transfer clock signal and a horizontal transfer clock signal supplied from a CCD control section 19. The charge storage time of each pixel, that is, exposure time is determined by an electronic shutter drive signal supplied from the CCD control section 19. The CCD 18 is gain-adjusted by the CCD control section 19 so that an analog image signal having a predetermined level is obtained.

An analog image signal picked up by the CCD 18 is inputted to an analog signal processing section 20. The analog signal processing section 20 includes: a correlated double sampling circuit (CDS) for removing noise from the analog signal; an automatic gain controller (AGC) for controlling the gain of the analog signal; and an A/D converter (ADC) for converting the analog signal to a digital signal. Hereinafter, processing performed by the analog signal processing section 20 is referred to as "analog signal processing". The image data converted to digital signal are CCD-RAW data in which each pixel has R, G, B density values.

A timing generator 21 is a generator that generates timing signals, which are inputted to the shutter drive section 17, CCD control section 19, and analog signal processing section 20, thereby the operation of the release button, open/close of the shutter 16, charge acquisition of the CCD 18, and the processing of the analog signal processing section 20 are synchronized.

The digital camera 1 further includes a flash 24 that emits flash light when required at the time of imaging.

An image input controller 25 writes the CCD-RAW data, inputted from the analog signal processing section 20, into a frame memory 26.

The frame memory 26 is a work memory used when various types of image processing (signal processing), to be described later, are performed on the image data, and constituted, for example, by a SDRAM (Synchronous Dynamic Random Access Memory) that performs data transfer in synchronization with a bus clock signal having a constant frequency.

A display control section 27 is a control section for causing a liquid crystal monitor 28 to display the image data stored in the frame memory 26 as through images, or to display a still picture or a moving picture stored in a built-in memory 35 when in playback mode.

The AF processing section 30 and AE/AWB processing section 31 determine an imaging condition based on a pre-image. The pre-image is an image based on the image data stored in the frame memory 26 as a result of pre-imaging performed by the CCD 18, which is caused by the CPU 42 that has detected a halfway depression signal generated when the release button is depressed halfway.

The AF processing section 30 detects a focus position based on the pre-image, and outputs focus drive amount data (AF processing) . As for the focus position detection method, for example, a passive method may be used, which makes use of the fact that the contrast becomes high when a desired subject is focused.

The AE/AWB processing section 31 measures subject brightness based on the pre-image, determines ISO sensitivity, aperture value, shutter speed, and the like, and determines the ISO sensitivity data, aperture value data, and shutter speed data as an exposure setting value(AE control), as well as automatically adjusting the white balance at the time of imaging (AWB control).

The image processing section 32 performs image quality control on the image data of a final image including tone correction, sharpness correction, color correction and the like, and YC processing in which CCD-RAW data are converted to YC data constituted by Y data (luminance signal data), Cb data (blue color difference signal data), and Cr data (red color difference signal data). The term "final image" as used herein means an image based on image data picked up by the CCD 18 through a main imaging performed when the release button is fully depressed and stored in the frame memory 26 via the analog signal processing section 20 and the image input controller 25. The image processing section 32 also performs required processing on the image data of a moving picture.

A compression/expansion section 33 generates an image file by performing, for example, JPEG format compression on the image data of a final image processed/converted by the image processing section 32. A tag that includes auxiliary information, such as the date and time of imaging, and the like stored based on, for example, Exif format or the like, is attached to the image file. When imaging is performed in the moving picture mode, the compression/ expansion section 33 generates an image file of the moving picture by compressing the image data of the moving picture by motion JPEG, MPEG or the like.

An image recording/reproducing section 34 controls recording of a generated image file to the built-in memory 35 and reading out the image file therefrom. The image recording/reproducing section 34 is connected only to the built-in memory 35 and not to the connector 5, so that the image file is not directly recorded in the external memory 6 even if it is connected to the connector 5, but recorded only to the built-in memory 35.

A connection detection section 36 detects connection/removal of the external memory 6 to/from the connector 5.

A memory control section 37 links the built-in memory 35 to the external memory 6 when the external memory 6 is connected to the connector 5, and transfers an image file recorded in the built-in memory 35 to the external memory 6. It is noted that the memory control section corresponds to the transfer means.

A memory 38 stores various constants to be set within the digital camera 1, a program to be performed by the CPU 42, and the like.

An information attaching section 39 attaches division information, when a plurality of image files is generated during a period from the time when an instruction to start imaging is received to the time when an instruction to terminate the imaging is received, that is, during a single imaging operation by the user, to each of the image files to indicate that each of the image files is one of a plurality of dividedly generated image files, which will be described later. More specifically, the division information is given to each of the image files by describing a file name common to the image files and the file number that indicates the order of the division in the header of each of the image files as the division information. In this case, the file name of each divided image file is the combination of the common file name and the file number described in the division information.

It is noted that the division information is not limited to the common file name and the file number, and a symbol common to the divided image files may be used.

A file conversion section 40 combines image files recorded in the built-in memory 35 as required. The combining processing will be described later.

The CPU 42 controls each section of the main body of the digital camera 1 in response to the signals from various sections, including the operation system 7, AF control section 30 and the like. Further, when the operation mode of the digital camera 1 is set to the moving picture imaging mode, the CPU 42 controls each section of the digital camera 1 including the imaging system 10 and memory control section 37 so that the following are performed: receiving a setting of a moving picture time, which is a continuous imaging time when imaging a moving picture, from the operation system 7; receiving a user instruction to start imaging a moving picture and initiating the imaging and image file generation; terminating the imaging of the moving picture to terminate the generation of the file when the imaging time of the moving picture reaches the end of the continuous imaging time; then restarting the imaging of the moving picture to initiate generation of a new image file; and repeating the generation of a new image file until a user instruction to terminate the imaging of the moving picture is received.

A data bus 43 is connected to each of the processing sections, frame memory 26, CPU 42 and the like, and image data, various instructions and the like are exchanged therethrough.

In the digital camera 1 according to the first embodiment which is configured in the manner as described above, when imaging a still picture or a moving picture, the image file obtained through the imaging is recorded to the built-in memory 35 by the image recording/reproducing section 34, and when reproducing the picture, the image file recorded in the built-in memory 35 is read out and the still picture or moving picture is displayed on the monitor 28. If a connection of an external memory 6 to the connector 5 is detected by the connection detection section 36, image files recorded in the built-in memory 35 are transferred, still picture files first and chronological order of imaging date and time, to the external memory 6 by the memory control section 37. This allows an image file recorded in the built-in memory 35 to be transferred to an external memory 6 without using a personal computer. Here, the image file after transfer is erased or the status thereof is changed to "Transferred". In the present embodiment, description will be made of a case in which the status is changed to "Transferred". In this case, by checking the status of an image file, it may be determined that whether the image file is already transferred or not.

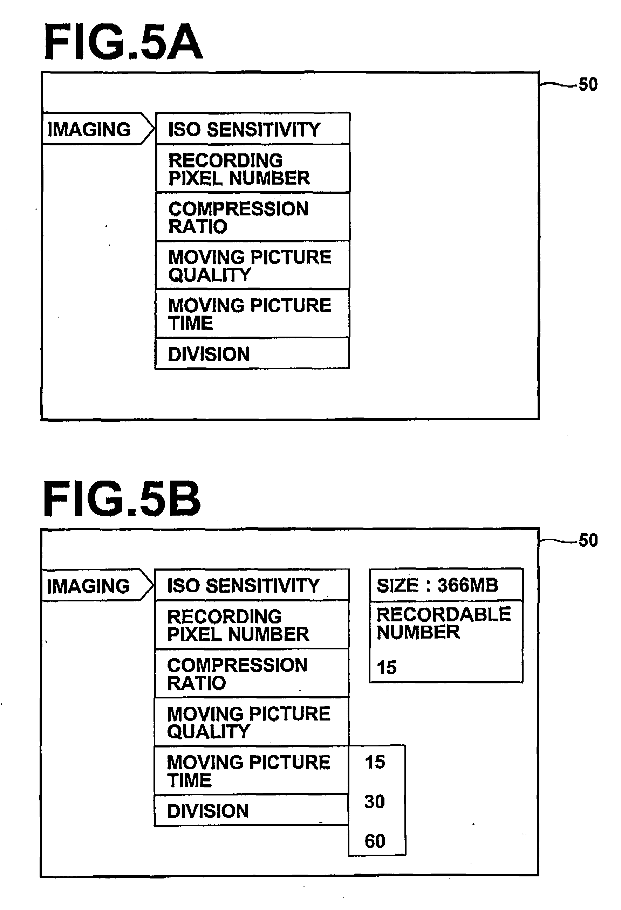

Next, processing performed in the first embodiment will be described. Figures 5A and 5B illustrate setting screens displayed on a monitor in the first embodiment. As illustrated in Figure 5A, a setting screen 50 is displayed on the monitor 28 through a user operation of the operation system 7. The setting screen 50 displays each command for setting ISO sensitivity, recording pixel number, compression ratio, moving picture quality, moving picture time, and division at the time of imaging. The user may select one of the commands for which a setting is performed using the operation system 7. The setting screen 50 is displayed when the operation mode of the digital camera 1 is set to still picture imaging mode or moving picture imaging mode.

In the setting screen 50, when one of the command of ISO sensitivity, recording pixel number, and compression ratio is selected, predetermined selection options of ISO sensitivity, recording pixel number, or compression ratio are displayed. The user may select a desired value from the displayed selection options. With respect to the moving picture quality, the user may select the size per minute (MB/min) from predetermined three level settings of "Hi", "Mid", and "Low". The command for the moving picture time is to set a continuous imaging time during which one image file is generated when imaging a moving picture, and user may select one of predetermined time of 15, 30, and 60 minutes. Here, a configuration may be adopted in which, when one of the predetermined times is selected as the Moving Picture Time, the size S of a image file which will be obtained when the moving picture is imaged is calculated according to the selected time, then a free capacity Y of the built-in memory 35 is detected, and the number of image files Y/S recordable to the built-in memory 35 is calculated based on the free capacity Y and the calculated size S of the image file. In this case, as illustrated in Figure 5B, the size of one image file and the number of recordable files may be displayed on the setting screen 50.

Further, in response to changing the moving picture time, the size of one image file and the number of recordable image files may be changed and displayed. This makes easier for the user to select a desired moving picture time.

Image files of an actually imaged moving picture differ in the size depending on the contents even if the imaging time is the same. Thus, a difference may arise between the size S calculated in the manner as described above and the size of an image file generated by actually imaging the moving picture. Accordingly, it is preferable that the size of the image file to be displayed in the manner as shown in Figure 5B is a maximum size taking into account the difference with respect to the calculated result.

The division command is provided for setting whether or not the imaging is continued to dividedly generate a plurality of image files when the imaging time of a moving picture through a single imaging operation exceeds the preset moving picture time, and the user may select either "Yes" or "No".

The setting result of each command on the setting screen is stored in the memory 38.

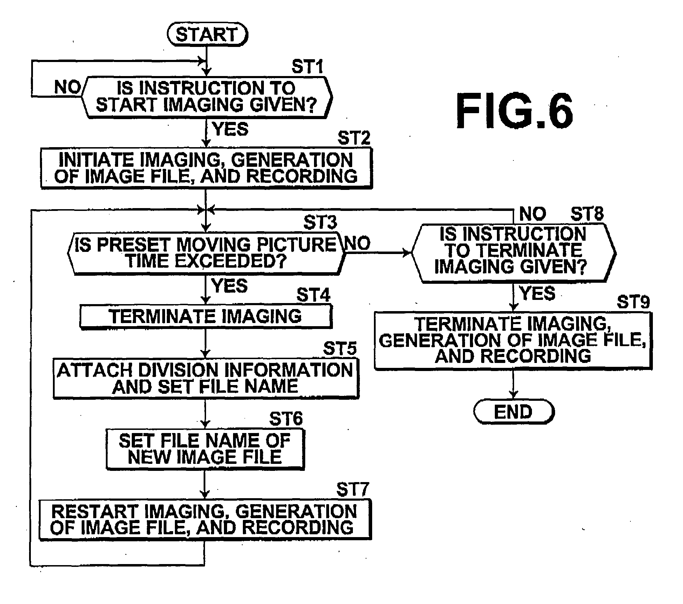

Figure 6 is a flowchart illustrating processing steps performed when a moving picture is imaged in the first embodiment. Here, it is assumed that the command of division on the setting screen is set to "Yes". When the operation mode is set to moving picture imaging mode by the user, the CPU 42 initiates the processing and monitors whether or not an instruction to start imaging a moving image is given by the user by depressing the release button 2 (step ST1). If step ST1 is positive, imaging of the moving picture, generation of an image file and recording of the generated image file to the built-in memory 35 is initiated (step ST2). Then, a determination is made as to whether or not the imaging time exceeds the moving picture time set in the manner as described above (step ST3). If step ST3 is positive, the imaging of the moving picture is terminated to terminate the generation of the image file (step ST4), and the information attaching section 39 attaches division information to the image file generated so far, and the file name is set (step ST5). For example, if the common file name and file number in the division information are [mov001] and [1] respectively, the file name of the image file is set like mov001_1.mov.

Next, the CPU 42 sets a file name to a new image file to be generated by restarting the imaging (step ST6), then the imaging, generation of the image file and recording of the image file to the built-in memory 35 is restarted (step ST7), and the processing returns to step ST3 and the processing from step ST3 onward are repeated. The file name of the new image file is set, for example, like mov002_2.mov.

In the mean time, if step ST3 is negative, a determination is made as to whether or not an instruction to terminate the imaging is given by the user through depression of the release button 2 (step ST8). If step ST8 is negative, the processing returns to step ST3 and the imaging is continued. While if step ST8 is positive, the imaging of the moving picture, generation of the image file and recording are terminated (step ST9), and the processing is terminated. Here, division information is attached to the generated image files.

In this way, in the first embodiment, the imaging time of a moving picture for each image file recorded in the built-in memory 35 is made constant. This may prevent the size of an image file from becoming excessively large as in the case where a very long moving picture is recorded in a single file. Thus, this may reduce the cases where image files become too large to be recorded in an external memory 6 or the battery of the digital camera 1 is exhausted while the image file is being transferred to the external memory 6. Further, this may eliminate the need to divide the image file when transferring it to the external memory 6.

Further, the image file is divided based on an imaging time, so that it is easy to know the timing at which the imaging will be terminated during the imaging. Thus, in a case where user wants to perform imaging without interruption like, for example, imaging of an event or a stage show, this may prevent the moving picture from being interrupted at an unexpected timing. Therefore, when imaging an important scene, the user may perform imaging while avoiding the timing when the moving picture will be interrupted by checking the elapsed time from the start of the imaging.

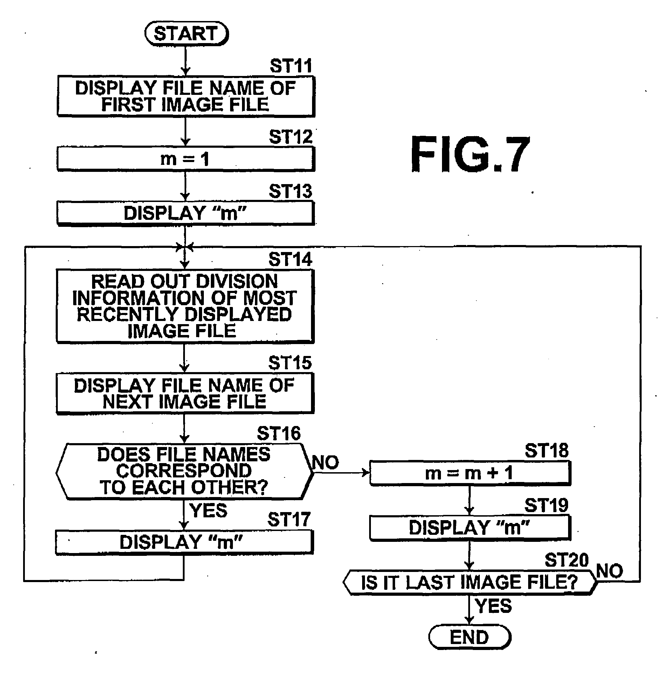

In the first embodiment, a record list of a moving picture may be generated using the division information attached to the image files. Hereinafter, generation of the record list will be described. Figure 7 is a flowchart of record list generation processing. Here, the CPU 42 corresponds to the file list generation means. The processing is initiated by the CPU 42 when an instruction to display a record list is given by the user through the operation system 7, and the file name of a first image file of those recorded in the built-in memory 35, when the image files are arranged in ascending order, is displayed in the record list (step ST11). Further, a variable "m", which indicates whether or not the image file is one of a plurality of dividedly generated image files, is set to 1 (step ST12), and the variable "m" is displayed in the division column of the record list (step ST13).

Then, the division information of the most recently displayed image file is read out (step ST14), and the file name of the next image file is displayed in the record list (step ST15). Then a determination is made as to whether or not the common section of the file name included in the division information read out in step ST14 and the common section of the file name of the next image file correspond to each other (step ST16). If step ST16 is positive, the variable "m" is displayed in the division column of the record list with respect to the most recently displayed image file (step ST17), and the processing returns to step ST14 and the steps from step ST14 onward are repeated.

In the mean time, if step ST16 is negative, a value of 1 is added to the variable "m" (step ST18), and the variable "m" is displayed in the division column of the record list with respect to the most recently displayed image file (step ST19). Then, a determination is made as to whether or not the image file whose file name is displayed is the last image file (step ST20). If step ST20 is negative, the processing returns to step ST14 and the steps from step ST14 onward are repeated. If step ST20 is positive, the processing is terminated.

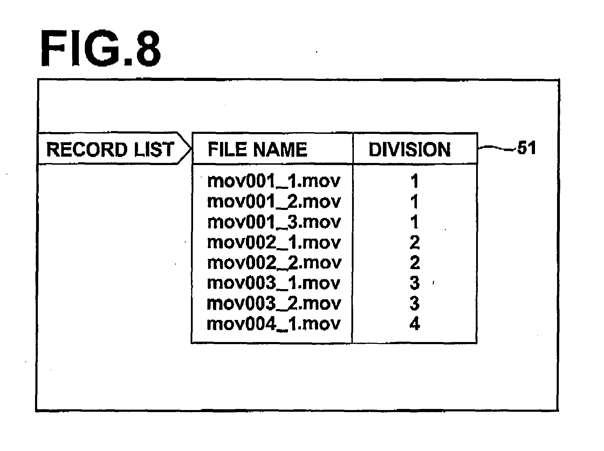

Figure 8 illustrates a record list displayed on the monitor 28. As illustrated in Figure 8, the record list 51 includes a file name column and a division column. The file names of image files recorded in the built-in memory 35 are displayed in the file name column. For image files dividedly generated during a period from the time when an instruction to start imaging is received to the time when an instruction to terminate the imaging is received, that is, during a single imaging operation by the user, the same variable value is displayed in the division column. For three image files with the file names mov0001_1.mov, mov0001_2.mov, and mov0001_3.mov respectively, for example, the variable value "1" indicating that they are dividedly generated is displayed. For the image files with the file names mov0002_1.mov and mov0002_2.mov, the variable value "2" is displayed, for the image files with the file names mov0003_1.mov and mov0003_2.mov, the variable value "3" is displayed, and for the image file with the file name mov0004_1.mov, the variable value "4" is displayed. Here, it can be found that the image file with the file name mov0004_1.mov is not divided by checking the division column.

In this way, by generating a record list using the division information attached to the image files and displaying the record list on the monitor 28, the user can easily find a plurality of image files generated by a single imaging operation. Accordingly, the user may carry out work operations easily for classifying or combining a plurality of image files generated by a single imaging operation at a later time.

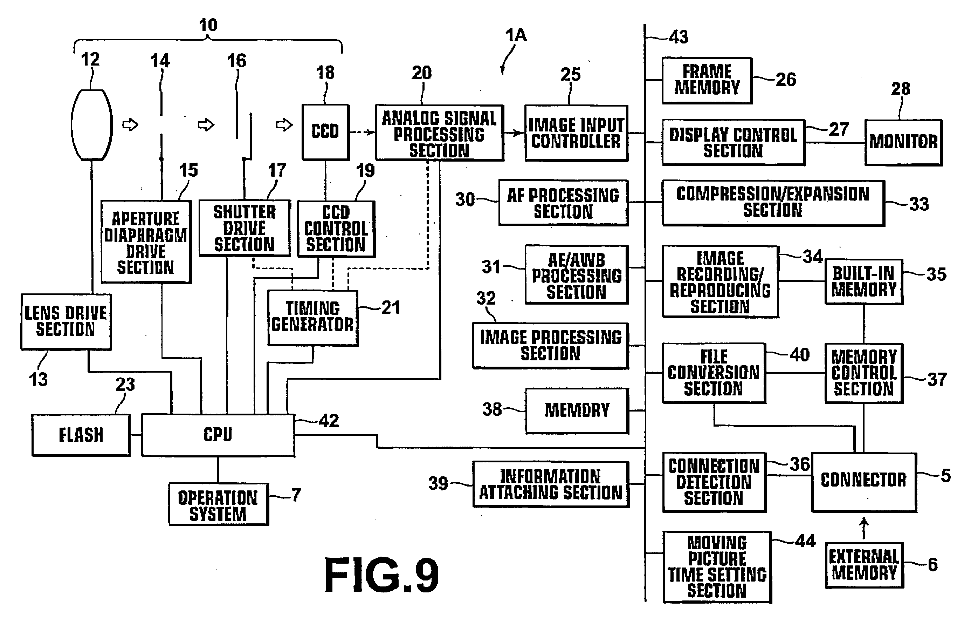

Next, a second embodiment of the present invention will be described. Figure 9 is a schematic block diagram of a digital camera to which an imaging apparatus according to a second embodiment of the present invention is applied, illustrating the internal configuration thereof. In the second embodiment, components identical to those of the first embodiment are given the same reference numerals and will not be elaborated upon further here. In the first embodiment, the moving picture time is set on the setting screen 50. The second embodiment differs from the first embodiment, in that the capacity of an external memory is set first, and then the moving picture time is calculated and set based on the determined capacity. As such, the second embodiment includes a moving picture time setting section 44 for calculating and setting the moving picture time based on the capacity of the external memory 6.

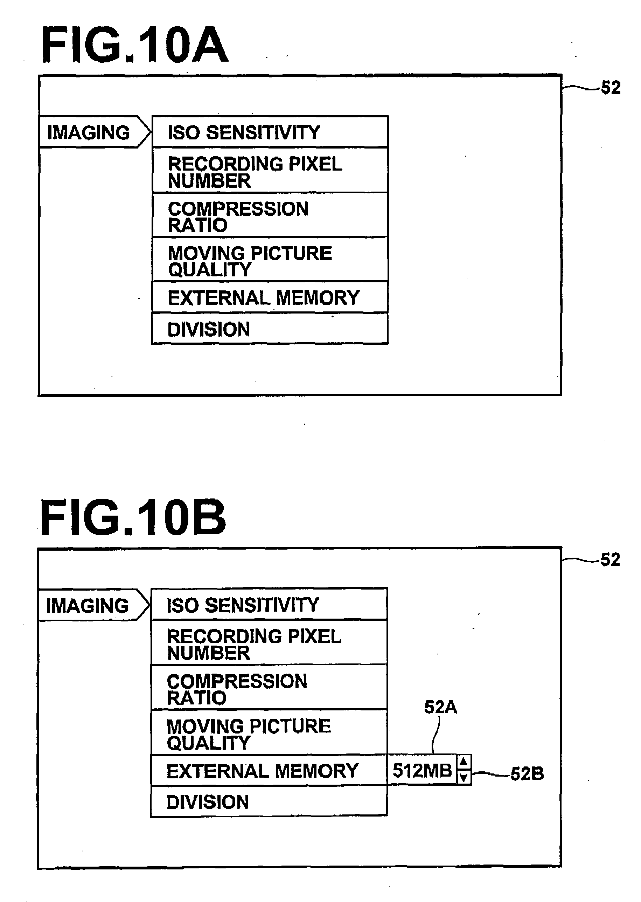

Figures 10A and 10B illustrate a setting screen for setting the capacity of an external memory displayed on the monitor 28 in the second embodiment. As illustrated in Figure 10A, a setting screen 52 displays each command for setting ISO sensitivity, recording pixel number, compression ratio, moving picture quality, external memory, and division at the time of imaging. The user may select one of the commands for which a setting is performed using the operation system 7. When the command of external memory is selected by the user, a screen for selecting the capacity of an external memory is displayed in a separate window 52A. The user may set the capacity of the external memory to one of 256MB, 512MB, 1GB, and 2GB by operating an up/down button 52B of the separate window 52A as illustrated in Figure 10B. It is noted that the switchable memory capacities are not limited to the aforementioned 4 capacities. The user may set a desired capacity for the external memory 6 to be used by displaying the capacity and operating the operation system 7. The setting result is stored in the memory 38.

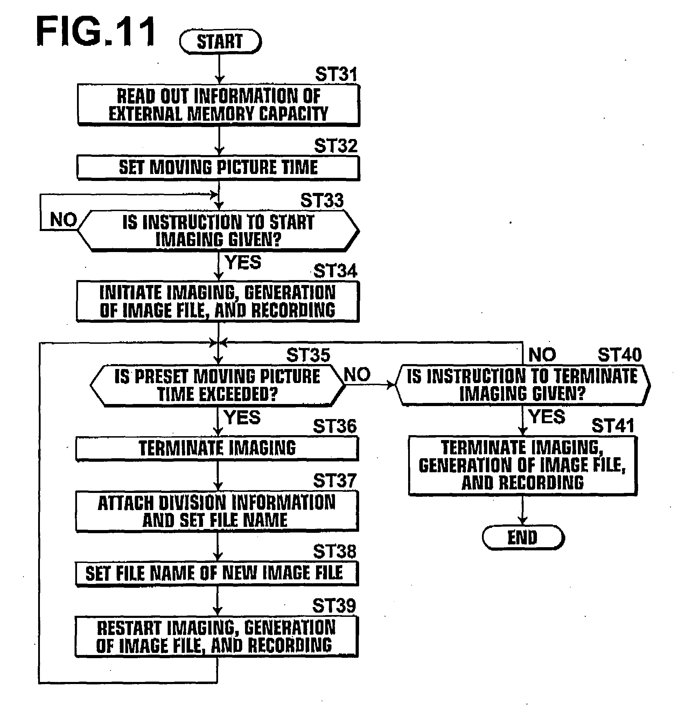

Next, processing performed in the first embodiment will be described. Figure 11 is a flowchart illustrating processing steps performed when a moving picture is imaged in the second embodiment. Here, it is assumed that the command of division on the setting screen is set to "Yes". When the operation mode is set to moving picture imaging mode by the user, the CPU 42 initiates the processing and reads out information of the capacity of the external memory 6 stored in the memory 38 (step ST31). Then, the moving picture time setting section 44 calculates and sets a moving picture time, which is the time during which a moving picture can be imaged continuously, based on the capacity of the external memory 6 (step ST32).

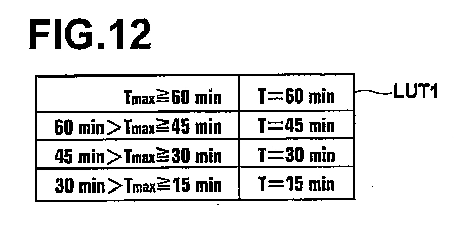

First, the moving picture time setting section 44 calculates a maximum continuous recording time Tmax from a capacity Xmax of the external memory 6 and a data rate LS for recording a moving picture (Tmax = Xmax/LS). Here, the moving picture time setting section 44 has a table stored therein for limiting the moving picture time up to 60 minutes and in increments of 15 minutes, like 15, 30, 45 and 60 minutes. Figure 12 illustrates such table LUT1. In Figure 12, the reference symbol T denotes the moving picture time.

With reference to the LUT1, the moving picture time setting section 44 sets the moving picture time to 60 minutes if the Tmax is greater than or equal to 60 minutes, to 45 minutes if the Tmax is greater than or equal to 45 minutes and less than 60 minutes, to 30 minutes if the Tmax is greater than or equal to 30 minutes and less than 45 minutes, and to 15 minutes if the Tmax is greater than or equal to 15 minutes and less than 30 minutes.

Then, whether or not an instruction to start imaging a moving image is given by the user by depressing the release button 2 is monitored (step ST33) . If step ST33 is positive, imaging of the moving picture, generation of an image file and recording of the generated image file to the built-in memory 35 is initiated (step ST34). Next, a determination is made as to whether or not the imaging time exceeds the moving picture time set in the manner as described above (step ST35). If step ST35 is positive, the imaging of the moving picture is terminated to terminate the generation of the image file (step ST36), and the information attaching section 39 attaches division information to the image file generated so far, and the file name is set(step ST37).

Next, the CPU 42 sets a file name to a new image file to be generated by restarting the imaging (step ST38), then the imaging, generation of the image file and recording of the image file to the built-in memory 35 is restarted (step ST39), and the processing returns to step ST35 and the processing from step ST35 onward are repeated.

In the mean time, if step ST35 is negative, a determination is made as to whether or not an instruction to terminate the imaging is given by the user through depression of the release button 2 (step ST40) . If step ST40 is negative, the processing returns to step ST35 and the imaging is continued. While if step ST40 is positive, the imaging of the moving picture, generation of the image file and recording are terminated (step ST41), and the processing is terminated. Here, division information is attached to the generated image files.

In this way, in the second embodiment, the file size of each image file recorded in the built-in memory 35 is limited to a size transferable to the external memory 6, so that the image file needs not be divided when transferred to the external memory 6.

Further, the maximum continuous imaging time Tmax is calculated from the capacity Xmax of the external memory 6 and the data rate LS of the moving picture, so that the size of the image file can be set such that the moving picture is not chopped so often, even though the file size is a transferable size to the external memory 6.

In the second embodiment, the capacity of the external memory 6 is inputted in the setting screen 52. In most cases, however, the user of the digital camera 1A uses only a single external memory 6. Therefore, an arrangement may be adopted in which the capacity of the external memory 6 used by the user is learned when capacity setting of the external memory 6 is performed by the user several times using the setting screen 52 and after the learning, the moving picture time is set from the learned capacity of the external memory 6 without receiving input of the capacity of the external memory 6 from the setting screen 52.

Next, image file transfer processing from the built-in memory 35 to an external memory 6 will be described. The image file transfer processing in the digital camera 1A according to the second embodiment is identical to that of the digital camera 1 according to the first embodiment, therefore only the transfer processing of an image file recorded in the built-in memory 35 in the first embodiment will be described.

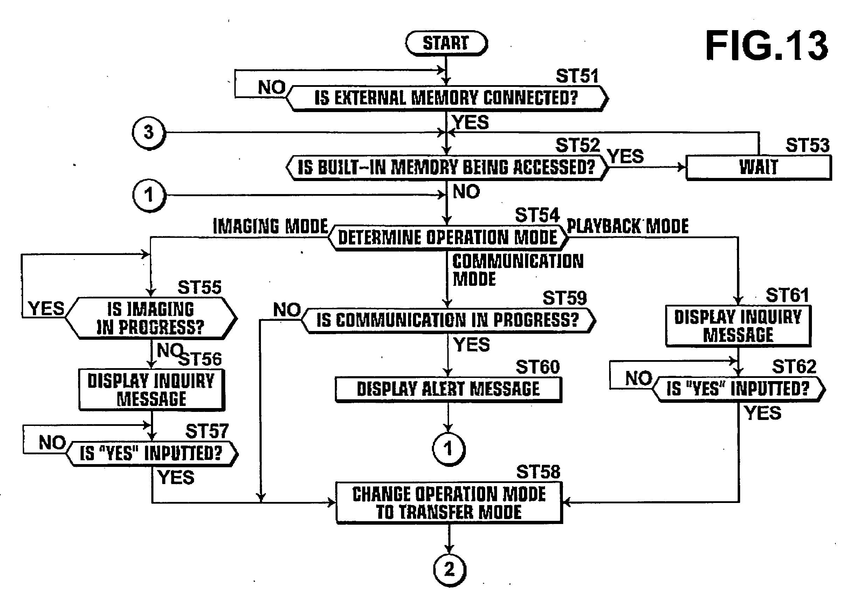

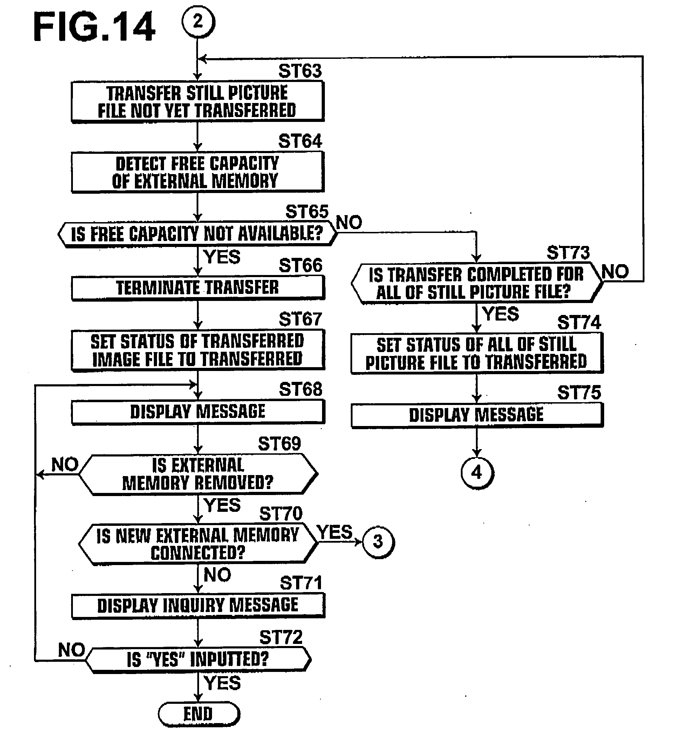

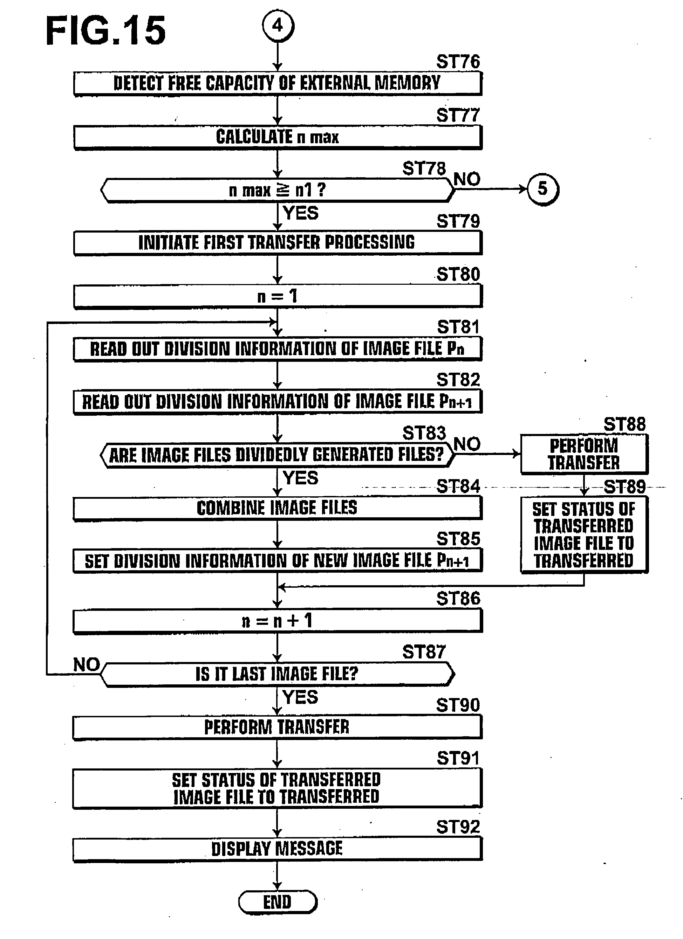

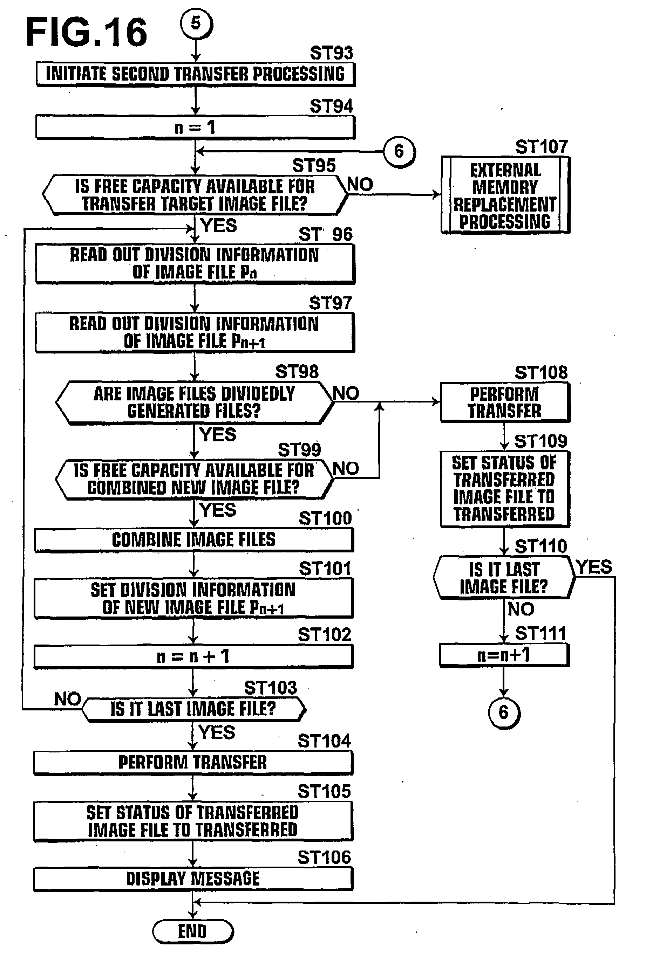

Figures 13 to 16 illustrate a flowchart of the image file transfer processing. The connection detection section 36 keeps monitoring whether or not an external memory 6 is connected to the connector 5 (step ST51). If an external memory 6 is connected to the connector 5 and step ST51 turns to positive, the memory control section 37 determines whether or not the built-in memory is being accessed (step ST52). If step ST52 is positive, the processing waits for a predetermined time (WAIT: step ST53) and returns to step ST52. If step ST52 is negative, the CPU 42 determines the operation mode of the digital camera 1(step ST54).

If the operation mode is imaging mode, a determination is made as to whether or not imaging is in progress (step ST55), which is repeated until step ST55 turns to negative. When step ST55 turns to negative, an inquiry message, something like "Is imaging terminated and data transfer performed?" is displayed on the monitor 28 (step ST56) . Then, monitoring is initiated whether or not an answer "YES" is inputted (step ST57). When step ST57 turns to positive, the operation mode is changed to transfer mode (step ST58).

If the operation mode is communication mode, a determination is made as to whether or not communication is in progress (step ST59) . The term "communication mode" as used herein means an operation mode of the digital camera 1 that allows communication for updating firmware of the digital camera 1, or if the digital camera 1 is a built-in camera of a mobile phone, in particular, a telephone conversation or an Internet access. If step ST59 is positive, an alert message is displayed indicating that image file transfer to the external memory 6 can not be performed (step ST60), and the processing returns to step ST54. If step ST59 is negative, the processing proceeds to step ST58 to change the operation mode to transfer mode.

If the operation mode is playback mode, an inquiry message, something like "Is playback terminated and data transfer performed" is displayed on the monitor 28 (step ST61). Then, monitoring is initiated whether or not an answer "YES" is inputted (step ST62). When step ST62 turns to positive, the processing proceeds to step ST58 to change the operation mode to transfer mode.

Following step ST58, the memory control section 37 transfers still picture files not yet transferred to the external memory 6 (step ST63). More specifically, the transfer is performed in chronological order of imaging date and time of still pictures. Then, a free capacity of the external memory 6 is detected every time transfer of one image file is completed (step ST64) to determine whether or not a free capacity remains in the external memory 6 (step ST65). When the free capacity of the external memory 6 is used up and step ST65 turns to positive, the transfer of the image files is terminated (step ST66) and the status of the transferred image files of those recorded in the built-in memory 35 is changed to "transferred" (step ST67).

Then a message, something like "Replace the external memory with a new one" is displayed on the monitor 28 (step ST68), and a determination is made as to whether or not the external memory 6 is removed (step ST69). If step ST69 is negative, the processing returns to step ST68.

When step ST69 turns to positive, a determination is made as to whether or not a new external memory 6 is connected (step ST70). When step ST70 turns to positive, the processing returns to step ST52. If step ST70 is negative, an inquiry message, something like "Is data transfer terminated?" is displayed on the monitor 28 (step ST71), and a determination is made whether or not an answer "YES" is inputted (step ST72). If step ST72 is negative, the processing returns to step ST68. If step ST72 is positive, the processing is terminated.

In the mean time, if step ST65 is negative, a determination is made as to whether all of untransferred still picture files recorded in the built-in memory 35 have been transferred or not (step ST73). If step ST73 is negative, the processing returns to step ST63 to continue the transfer of the still picture files. If step ST73 is positive, the status of all of still picture files recorded in the built-in memory 35 is changed to "Transferred" (step ST74), and a message, something like "Still picture transfer completed" is displayed on the monitor 28 (step ST75).

Following step ST75, the memory control section 37 detects a free capacity of the external memory 6 (step ST76) to calculate the number of image files nmax transferable to the external memory 6 (step ST77). Here, when the free capacity of the external memory 6 is assumed to be X1 and the size of each moving picture file is assumed to be S, the nmax equals to X1/S.

Then, the memory control section 37 determines whether or not all of moving picture files recorded in the built-in memory 35 not yet transferred are transferable to the external memory 6 (step ST 78) . That is, if the number of moving picture files recorded in the built-in memory 35 not yet transferred is assumed to be n1, a determination is made as to whether or not nmax ≥ n1.

If step ST78 is positive, transfer processing (first transfer processing) of all of moving picture files recorded in the built-in memory 35 is initiated (step ST79) . First, the memory control section 37 sets the transfer target image file to a first untransferred image file (n = 1, step ST80), then reads out the division information of the transfer target image file Pn (step ST81), and further reads out the division information of the next image file Pn+1 (step ST82) . Then, a determination is made as to whether or not the image files Pn and Pn+1 have been generated by a single imaging operation by the user, that is, whether or not these image files have been dividedly generated (step ST83) . If step ST83 is positive, the file conversion section 40 combines the image files Pn and Pn+1 to generate a new image file Pn+1 (step ST84).

Then, the division information of the new image file Pn+1 is set to the division information of the image file Pn+1 prior to the combining (step ST85), and the transfer target is changed to the next image file (n = n + 1: step ST86). Then, a determination is made as to whether or not the transfer target image file is the last image file to be transferred (step ST87). If step ST87 is negative, the processing returns to step ST81. This results in that all of image files generated by a single imaging operation by the user to be combined.

In the mean time, if step ST83 is negative, the memory control section 37 transfers the transfer target image file Pn to the external memory 35 (step ST88), and sets the status of the transferred moving picture file to "Transferred" (step ST89), and the processing proceeds to step ST86.

If step ST87 is positive, the transfer target image file Pn is transferred to the external memory 6 (step ST90), then the status of the transferred moving picture file is set to "Transferred" (step ST91), and a message, something like "Moving picture transfer completed" is displayed on the monitor 28 (step ST92), thereafter the processing is terminated.

In the mean time, if step ST78 is negative, sequential transfer processing (second transfer processing) of moving picture files recorded in the built-in memory 35 is initiated (step ST93) . First, the memory control section 37 sets the transfer target image file to a first untransferred image file (n = 1, step ST94), and determines whether or not the external memory 6 has a free capacity for the transfer target image file Pn (step ST95).

If step ST95 is positive, the division information of the transfer target image file Pn is read out (step ST96), and further the division information of the next image file Pn+1 is read out (step ST97) . Then, a determination is made as to whether or not the image files Pn and Pn+1 have been generated by a single imaging operation by the user, that is, whether or not these image files have been dividedly generated (step ST98) . If step ST98 is positive, a determination is made as to whether or not the external memory 6 has a free capacity for a new image file Pn+1 to be generated by combining the two image files Pn and Pn+1 (step ST99).

If step ST99 is positive, the file conversion section 40 combines the image files Pn and Pn+1 to generate the new image file Pn+1 (step ST100).

Then, the division information of the new image file Pn+1 is set to the division information of the image file Pn+1 prior to the combining (step ST101), and the transfer target is changed to the next image file (n = n + 1: step ST102). Then, a determination is made as to whether or not the transfer target image file is the last image file to be transferred (step ST103) . If step ST103 is negative, the processing returns to step ST96. This results in that a plurality of image files generated by a single imaging operation by the user to be combined as long as the external memory 6 has a free capacity for the new image file.

If step ST103 is positive, the transfer target image file Pn is transferred to the external memory 6 (step ST104), then the status of the transferredmoving picture file is set to "Transferred" (step ST105), and a message, something like "Moving picture transfer completed" is displayed on the monitor 28 (step ST106), thereafter the processing is terminated.

In the mean time, if step ST95 is negative, the processing proceeds to external memory replacement processing (step ST107), which will be described later.

If step ST98 is negative, the memory control section 37 transfers the transfer target image file Pn to the external memory 35 (step ST108), and sets the status of the transferred moving picture file to "Transferred" (step ST109). Then, a determination is made as to whether or not the transfer target image file is the last image file to be transferred (step ST110). If step ST110 is positive, the processing is terminated. If step ST110 is negative, the transfer target is changed to the next image file (n = n + 1: step ST111), and the processing returns to step ST95.

If step ST99 is negative, that is, the external memory 6 has a free capacity which is greater than for the transfer target image file Pn but smaller for the combined new image file Pn+1, the processing proceeds to step ST108 to transfer the target image file Pn to the external memory 6 without combining the image files.

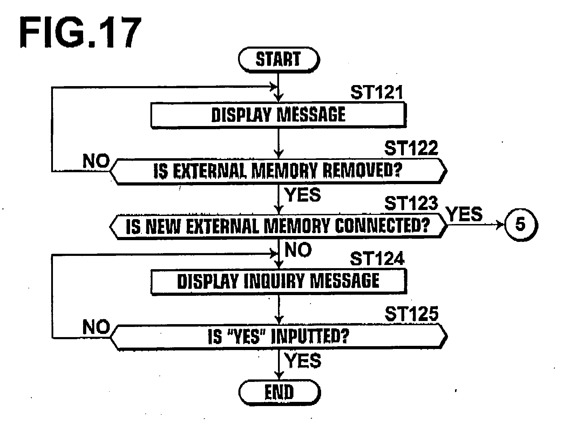

Figure 17 is a flowchart illustrating the external memory replacement processing. First, the memory control section 37 displays a message, something like "Replace the external memory with a new one" on the monitor 28 (step ST121), and determines whether or not the external memory 6 is removed (step ST122). If step ST122 is negative, the processing returns to step ST121.

When step ST122 turns to positive, a determination is made as to whether or not a new external memory 6 is connected (step ST123). When step ST123 turns to positive, the processing returns to step ST93. If step ST123 is negative, an inquiry message, something like "Is data transfer terminated?" is displayed on the monitor 28 (step ST124), and a determination is made whether or not an answer "YES" is inputted (step ST125) . If step ST125 is negative, the processing returns to step ST124. If step ST125 is positive, the processing is terminated.

In this way, the number of image files transferable to the external memory 6 is calculated according to the free capacity of the external memory 6, and image files are combined based on the number of the files and division information, thereby a moving picture file having a size which can be stored in the external memory 6 may be obtained. This eliminates the need for the user to edit or combine image files according to the free capacity of the external memory 6.

In the embodiments described above, a plurality of image files generated by a single imaging operation by the user is transferred after combined. But the image files may be sequentially transferred from the leading file to the external memory 6 without combining them.

Further, in the embodiments described above, the image file transfer is performed when a connection of an external memory 6 to the connector 5 is detected, but an arrangement may be adopted in which the transfer is performed after the external memory 6 is connected to the connector 5 and an instruction to start the transfer is received from the user.

Still further, in the embodiments described above, all of image files recorded in the built-in memory 35 are transferred to the external memory 6 after combined as required. But an arrangement may be adopted in which the image file transfer is performed after having the user specify desired image files to be transferred or specify whether or not they are combined.

Further, in the embodiments described above, the description has been made of a case in which the division command is set to "YES". If the division command is set to "NO", when the imaging time of a moving picture by a single imaging operation exceeds the moving picture time, the imaging, generation of the image file and recording are terminated without generating a new image file.

So far embodiments of the present invention have been described. A program for causing a computer to function as the means corresponding to the image recording/reproducing section 34, connection detection section 36, information attaching section 39, file conversion section 40, and moving picture time setting section 44, and to perform the processing illustrated in Figures 6, 7, 11, 13 to 17 is also one of the embodiments of the present invention. Further, a computer readable recording medium on which such program is recorded is still another embodiment of the present invention.

## Claims

1. An imaging apparatus comprising:
an imaging means (10) for imaging a moving picture and generating an image file of the moving picture;
a built-in memory (35) for recording the image file;
an image recording means (34) for recording the image file to the built-in memory (35) and reading out the image file therefrom;
a connection means (5) for connecting an external memory (6);
a transfermeans (37) for transferring the image file recorded in the built-in memory (35) to the external memory (6) connected to the connection means (5);
an imaging time setting means (7, 42) for receiving a setting of a continuous imaging time during which one image file is generated when imaging the moving picture;
an imaging control means (42) for controlling the imaging means (10) and the image recording means (34) such that the following are performed: receiving an instruction to start imaging of the moving picture and initiating the imaging and generation of the image file; terminating the imaging of the moving picture to terminate the generation of the image file when the imaging time of the moving picture reaches the end of the continuous imaging time; then restarting the imaging of the moving picture to start generation of a new image file; and repeating the generation of a new image file until an instruction to terminate the imaging of the moving picture is received; and
an information attaching means (39) for attaching, when a plurality of image files is generated during a period from the time when the instruction to start imaging is received to the time when the instruction to terminate the imaging is received, division information indicating that each of the image files is one of a plurality of dividedly generated image files to each of the image files.

2. An imaging apparatus comprising:
an imaging means (10) for imaging a moving picture and generating an image file of the moving picture;
a built-in memory (35) for recording the image file;
an image recording means (34) for recording the image file to the built-in memory (35) and reading out the image file therefrom;
a connection means (5) for connecting an external memory (6);
a transfer means (37) for transferring the image file recorded in the built-in memory (35) to the external memory (6) connected to the connection means (5);
a capacity information obtaining means (7, 50) for obtaining information of a capacity of the external memory (6);
an imaging time setting means (44) for setting a continuous imaging time during which one image file is generated when imaging the moving picture based on the capacity of the external memory (6);
an imaging control means (42) for controlling the imaging means (10) and the image recording means (34) such that the following are performed: receiving an instruction to start imaging of the moving picture and initiating the imaging and generation of the image file; terminating the imaging of the moving picture to terminate the generation of the image file when the imaging time of the moving picture reaches the end of the continuous imaging time; then restarting the imaging of the moving picture to start generation of a new image file; and repeating the generation of a new image file until an instruction to terminate the imaging of the moving picture is received; and
an information attaching means (39) for attaching, when a plurality of image files is generated during a period from the time when the instruction to start imaging is received to the time when the instruction to terminate the imaging is received, division information indicating that each of the image files is one of a plurality of dividedly generated image files to each of the image files.

3. The imaging apparatus according to claim 1 or 2, further comprising a file conversion means (40) for generating a combined moving picture file by combining image files recorded in the built-in memory (35) and having corresponding division information attached thereto according to a free capacity of the external memory (6), when the external memory (6) is connected to the connection means (5) .

4. The imaging apparatus according to any of claims 1 to 3, further comprising a file list generation means (42) for generating a file list of image files recorded in the built-in memory (35) including the division information attached to the image files.

5. An imaging method for use with an imaging apparatus having:
an imaging means (10) for imaging a moving picture and generating an image file of the moving picture; a built-in memory (35) for recording the image file; an image recording means (34) for recording the image file to the built-in memory (35) and reading out the image file therefrom; a connection means (5) for connecting an external memory (6); and a transfer means (37) for transferring the image file recorded in the built-in memory (35) to the external memory (6) connected to the connection means (5), the method comprising the steps of:
receiving a setting of a continuous imaging time during which one image file is generated when imaging the moving picture;
receiving an instruction to start imaging of the moving picture and initiating the imaging and generation of the image file;
terminating the imaging of the moving picture to terminate the generation of the image file when the imaging time of the moving picture reaches the end of the continuous imaging time;
then restarting the imaging of the moving picture to start generation of a new image file;
repeating the generation of a new image file until an instruction to terminate the imaging of the moving picture is received; and
when a plurality of image files is generated during a period from the time when the instruction to start imaging is received to the time when the instruction to terminate the imaging is received, attaching division information indicating that each of the image files is one of a plurality of dividedly generated image files to each of the image files.

6. An imaging method for use with an imaging apparatus having an imaging means (10) for imaging a,moving picture and generating an image file of the'moving picture; a built-in memory (35) for recording the image file; an image recording means (34) for recording the image file to the built-in memory (35) and reading out the image file therefrom; a connection means (5) for connecting an external memory (6); and a transfer means (37) for transferring the image file recorded in the built-in memory (35) to the external memory (6) connected to the connection means (5), the method comprising the steps of:
obtaining information of a capacity of the external memory (6) ;
setting a continuous imaging time during which one image file is generated when imaging the moving picture based on the capacity of the external memory (6);
receiving an instruction to start imaging of the moving picture and initiating the imaging and generation of the image file;
terminating the imaging of the moving picture to terminate the generation of the image file when the imaging time of the moving picture reaches the end of the continuous imaging time;
then restarting the imaging of the moving picture to start generation of a new image file;
repeating the generation of a new image file until an instruction to terminate the imaging of the moving picture is received; and
when a plurality of image files is generated during a period from the time when the instruction to start imaging is received to the time when the instruction to terminate the imaging is received, attaching division information indicating that each of the image files is one of a plurality of dividedly generated image files to each of the image files.

7. The imaging method according to claim 5 or 6, further comprising the step of generating a combined moving picture file by combining image files recorded in the built-in memory (35) and having corresponding division information attached thereto according to a free capacity of the external memory (6), when the external memory (6) is connected to the connection means (5).

8. A computer program product for causing a computer to perform an imaging method for use with an imaging apparatus having: an imaging means (10) for imaging a moving picture and generating an image file of the moving picture; a built-in memory (35) for recording the image file; an image recording means (34) for recording the image file to the built-in memory (35) and reading out the image file therefrom; a connection means (5) for connecting an external memory (6); and a transfer means (37) for transferring the image file recorded in the built-in memory (35) to the external memory (6) connected to the connection means (5), the method comprising the steps of:
receiving a setting of a continuous imaging time during which one image file is generated when imaging the moving picture;
receiving an instruction to start imaging of the moving picture and initiating the imaging and generation of the image file;
terminating the imaging of the moving picture to terminate the generation of the image file when the imaging time of the moving picture reaches the end of the continuous imaging time;
then restarting the imaging of the moving picture to start generation of a new image file;
repeating the generation of a new image file until an instruction to terminate the imaging of the moving picture is received; and
when a plurality of image files is generated during a period from the time when the instruction to start imaging is received to the time when the instruction to terminate the imaging is received, attaching division information indicating that each of the image files is one of a plurality of dividedly generated image files to each of the image files.

9. A computer program product for causing a computer to perform an imaging method for use with an imaging apparatus having: an imaging means (10) for imaging a moving picture and generating an image file of the moving picture; a built-in memory (35) for recording the image file; an image recording means (34) for recording the image file to the built-in memory (35) and reading out the image file therefrom; a connection means (5) for connecting an external memory (6); and a transfer means (37) for transferring the image file recorded in the built-in memory (35) to the external memory (6) connected to the connection means (5), the method comprising the steps of:
obtaining information of a capacity of the external memory (6);
setting a continuous imaging time during which one image file is generated when imaging the moving picture based on the capacity of the external memory (6);
receiving an instruction to start imaging of the moving picture and initiating the imaging and generation of the image file
terminating the imaging of the moving picture to terminate the generation of the image file when the imaging time of the moving picture reaches the end of the continuous imaging time;
then restarting the imaging of the moving picture to start generation of a new image file;
repeating the generation of a new image file until an instruction to terminate the imaging of the moving picture is received; and
when a plurality of image files is generated during a period from the time when the instruction to start imaging is received to the time when the instruction to terminate the imaging is received, attaching division information indicating that each of the image files is one of a plurality of dividedly generated image files to each of the image files.

10. The computer program product according to claim 8 or 9, **characterized in that** the method further comprising the step of generating a combined moving picture file by combining image files recorded in the built-in memory (35) and having corresponding division information attached thereto according to a free capacity of the external memory (6), when the external memory (6) is connected to the connection means (5).
